# FASCICULE DE BREVET EUROPEEN

(11) **EP 1 241 145 B1**
(45) Date de publication et mention de la délivrance du brevet: **15.10.2003**
(21) Numéro de dépôt: 01870043.5
(22) Date de dépôt: 13.03.2001
(51) Int. Cl.: C03C 8/16, C23D 5/00, C23D 5/02, C23D 5/04

(54) **Composition d'émaillage et procédé de production d'une pièce formée en tôle émaillée**
Emaillenzusammensetzung und Verfahren zur Herstellung eines Produktes aus emailiertem Stahlblech
Enamelling composition and process for the manufacture of an enamelled steel sheet product

(43) Date de publication de la demande: 18.09.2002
(73) Titulaire: Recherche et Développement GROUPE COCKERILL SAMBRE, 4000 Liège (BE)
(72) Inventeur: Schrynemackers, Jean, 4053 Chaudfontaine (BE); Abeloos, Christophe, 4000 Liège (BE)
(74) Mandataire: Claeys, Pierre

(56) Documents cités:
- EP-A- 0 556 456
- FR-A- 2 784 372
- GB-A- 1 370 288

## Description

L'invention concerne une composition d'émaillage et un procédé de production d'une pièce mise en forme en tôle émaillée.

La méthode traditionnelle de production d'une pièce formée en tôle émaillée comprend principalement les opérations suivantes :
- une pièce de tôle plane est mise en forme (par emboutissage, et/ou pliage et/ou cintrage, etc.);
- la tôle mise en forme est dégraissée et décapée et est éventuellement soumise à d'autres traitements de surface tels que phosphatation, nickelage, etc.);
- une couche de fritte d'émail pulvérulente est appliquée sur la pièce de tôle ainsi préparée (par exemple à l'aide d'un pistolet électrostatique);
- la pièce ainsi revêtue est cuite pour provoquer la vitrification de la fritte d'émail.

Une telle méthode traditionnelle présente certains inconvénients. On notera tout d'abord que cette méthode implique nécessairement un prétraitement (dégraissage, décapage, phosphatation, etc.) des pièces en tôle mises en forme, chez l'émailleur. Or, alors que le prétraitement de tôles planes est une opération relativement simple et rapide, qui peut être effectuée en continu, le prétraitement de pièces en tôle mises en forme est sensiblement plus compliqué et moins rapide.

De plus, alors que, avec les techniques actuelles, l'application d'une composition d'émaillage sur des tôles planes peut être effectuée rapidement, en continu et de manière très régulière (d'où une excellente régularité d'épaisseur de la couche d'émail), l'application d'une composition d'émaillage sur pièces de tôle mises en forme est une opération qui est inévitablement plus lente et plus complexe et qui ne permet pas d'obtenir la même régularité d'épaisseur de la couche d'émail.

On a déjà cherché à remédier à ces inconvénients de la technique d'émaillage traditionnelle.

Le document US-A-5,325,580 décrit un procédé de production de pièces formées en tôle émaillée, dans lequel :
- avant la mise en forme, on applique (au rouleau) sur une tôle d'acier une couche d'une composition comprenant une fritte d'émail dispersée dans une solution d'un liant polymère, puis on sèche (évaporation de solvant) et/ou on cuit cette couche,
- éventuellement, on applique une seconde couche d'une telle composition qui est, à son tour, séchée et/ou cuite,
- on met ensuite en forme cette tôle revêtue, dans la forme de la pièce à produire,
- on cuit ensuite la pièce en tôle revêtue et mise en forme, à une température comprise entre 560°C et 850°C, de manière à brûler le liant polymère et vitrifier la fritte d'émail.

La technique décrite dans US-A-5,325,580 offre certains avantages par rapport à la technique d'émaillage antérieurement connue. En particulier, cette nouvelle technique permet d'appliquer la composition d'émaillage sur des tôles planes et non plus sur des tôles préformées.

Les tôles planes ainsi revêtues peuvent être foumies à l'émailleur; les tôles ne doivent plus être prétraitées dans les installations de celui-ci.

La technique suivant US-A-5,325,580 implique toutefois qu'à la suite de l'application de la composition d'émaillage fluide sur les tôles planes, d'importantes quantités de solvants doivent être évaporées et incinérées. Les liants polymères contenus dans les compositions d'émaillage décrites dans ce document peuvent être des polymères thermoplastiques ou des résines thermodurcissables. Les revêtements obtenus avec les compositions contenant des polymères thermoplastiques (avant la cuisson de vitrification) ne sont pas très stables (en particulier, ils résistent mal aux solvants). On préfère donc les compositions contenant des résines thermodurcissables qui permettent d'obtenir des revêtements plus stables et qui résistent aussi mieux à l'opération de mise en forme. Toutefois, la composition fluide d'émaillage à base de résine thermodurcissable qui est spécifiquement décrite dans US-A-5,325,580 manque de stabilité à température ambiante, les constituants de la résine thermodurcissable dissous dans la composition ayant tendance à réagir entre eux, même à température ambiante, ce qui donne lieu à une évolution de la viscosité qui nécessite des adaptations fréquentes des conditions d'application, notamment dans le cas de l'enduction au rouleau.

Le but de la présente invention est dès lors d'offrir une technique d'émaillage qui ne présente pas ces inconvénients de la technique antérieure.

La présente invention a pour objet une composition d'émaillage comprenant une fritte d'émail et une résine thermodurcissable, cette composition consistant en une poudre en substance exempte de solvant pour cette résine.

Dans la définition de la composition donnée ci-dessus, il faut comprendre que la résine thermodurcissable ou les constituants dont elle est faite ne peuvent évidemment pas être considérés comme "solvants".

La composition suivant l'invention est en principe exempte de solvant. L'expression "en substance exempte de solvant" est utilisée ici pour tenir compte du fait que la composition pourrait néanmoins avoir une très faible teneur en solvant, ce qui pourrait être dû, par exemple, au fait que du solvant serait contenu en faible quantité ou à l'état de traces dans la résine thermodurcissable ou dans l'un ou l'autre de ses constituants.

Suivant une forme d'exécution avantageuse, ladite résine thermodurcissable comprend :
- un ou plusieurs polymère(s) réticulable(s),
- un ou plusieurs agent(s) de réticulation apte(s) à provoquer la réticulation du ou des polymère(s) réticulable(s), en quantité suffisante pour réticuler le ou les polymère(s) réticulable(s)
- au moins un catalyseur, en quantité suffisante pour catalyser la réaction de réticulation entre le ou les polymère(s) réticulable(s) et le ou les agent(s) de réticulation.

Les résines thermodurcissables contenues dans la composition peuvent notamment être choisies parmi les résines thermodurcissables qui sont classiquement utilisées dans les compositions de peinture en poudre.

Les polymères réticulables compris dans ces résines peuvent notamment être choisis parmi les polymères réticulables du type époxy, polyester ou acrylique.

L'agent de réticulation (ou "durcisseur") qui doit provoquer la réticulation en réagissant avec les groupements réactifs du polymère réticulable doit évidemment être choisi, de manière connue, suivant le polymère à réticuler, et plus particulièrement suivant la nature des groupements réactifs de ce polymère. La proportion entre le polymère réticulable et l'agent de réticulation doit également être choisie, de manière connue, suivant la nature de ces substances mises en oeuvre et suivant le taux de réticulation souhaité.

Le ou les catalyseurs qui entrent dans la composition doivent évidemment aussi être choisis suivant le polymère réticulable et l'agent de réticulation compris dans la composition, puisqu'ils doivent catalyser la réaction entre ces substances.

Le ou les polymère(s) réticulable(s), le ou les agent(s) de réticulation et le ou les catalyseur(s), ainsi que la proportion entre ces constituants doivent être choisis de manière telle que la réaction de réticulation ne soit que très faible au cours de la fabrication de la composition (qui sera décrite ci-après), mais que cette réticulation soit rapide et suffisante au moment où on voudra la provoquer, lors de l'utilisation de la composition.

La résine thermodurcissable peut avantageusement aussi comprendre au moins un agent d'étalement. Les agents d'étalement, qui contribuent à obtenir un bon étalement et un bon aspect du film fondu qui sera formé sur la tôle, peuvent notamment être choisis parmi les agents d'étalement connus dans le domaine des peintures en poudre. Ces agents d'étalement peuvent notamment être à base de polyacrylates.

La résine thermodurcissable peut avantageusement aussi comprendre au moins un agent de dégazage apte à entraîner les produits volatils formés durant l'opération de réticulation. L'agent de dégazage, qui permet d'éviter les formations de défauts, comme les "piqûres d'épingle" peut notamment être choisi parmi les agents de dégazage connus dans le domaine des peintures en poudre, et peut par exemple consister en benzoïne.

Suivant une forme d'exécution particulière de l'invention, la composition comprend en outre au moins un agent lubrifiant. L'agent lubrifiant peut notamment être choisi parmi les cires de polyéthylène, les cires de polyéthylène oxydées, et les copolymères de bas poids moléculaire de l'éthylène avec l'acétate de vinyle ou l'acide acrylique. L'incorporation d'une faible quantité (par exemple de l'ordre de 1% en poids) d'un tel agent lubrifiant dans la composition, facilite la mise en forme d'une tôle revêtue d'un film réticulé obtenu au départ de la composition suivant l'invention. La présence d'un tel lubrifiant dans la composition peut surtout être utile pour réduire le risque de dégradation d'un tel film réticulé, lorsque la mise en forme de la tôle nécessite de fortes déformations (par exemple lors d'une mise en forme par emboutissage profond).

De manière avantageuse, la composition suivant l'invention contient au moins 50% et de préférence au moins 70% en poids de fritte d'émail, par rapport au poids total de la composition.

Comme fritte d'émail comprise dans la composition, on peut utiliser l'une ou l'autre des frittes d'émail habituellement utilisées pour l'émaillage sur tôle d'acier lorsque l'application de l'émail est réalisée après la mise en forme des tôles nues.

Il est à noter que pour l'émaillage des tôles par la méthode classique, on utilise généralement un premier type de fritte d'émail pour former l'émail de base dit "émail de masse", destiné à former la première couche adhérente appliquée au contact du métal. Un second type de fritte d'émail est ensuite utilisé pour former la couche d'émail de finition (ou " de couverte") qui est généralement opaque, blanche ou colorée. L'un ou l'autre de ces types de fritte d'émail peuvent être utilisées pour fabriquer une composition conforme à l'invention; suivant que cette composition est destinée à être utilisée pour former la première ou la seconde couche d'émail.

Les tableaux ci-dessous indiquent, à titre d'exemples, des compositions usuelles de frittes :

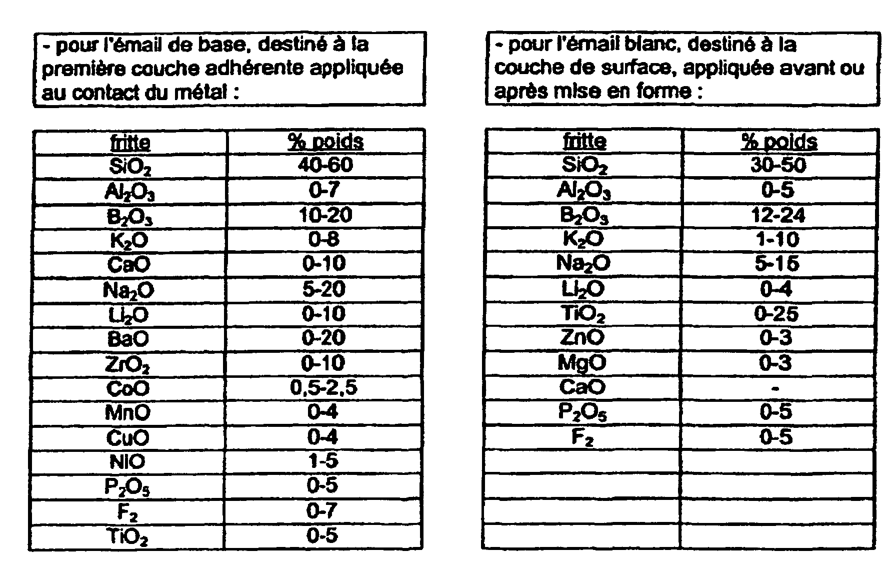

La fritte d'émail comprise dans la composition a de préférence une répartition granulométrique telle qu'on observe un refus de moins de 10% en volume (par exemple compris entre 6% et 10%) après tamisage avec un tamis de 40 µm (suivant la norme EN 10209).

La composition suivant l'invention, dans son ensemble, doit consister en une poudre fine, le maximum de sa courbe de répartition granulométrique mesurée sur un appareil du type Coulter® étant avantageusement égal ou inférieur à 100 µm, et de préférence égal ou inférieur à 80 µm.

L'invention a également pour objet un procédé de fabrication d'une composition d'émaillage telle que décrite ci-dessus, procédé suivant lequel :
- de la fritte d'émail sous forme pulvérulente et de la résine thermodurcissable sous forme pulvérulente ou granulaire sont mélangés,
- ce mélange est chauffé et malaxé à une température supérieure à la température de fusion de la résine thermodurcissable mais inférieure à la température de réticulation,
- le mélange ainsi malaxé à chaud est ensuite refroidi en dessous de la température de transition vitreuse de la résine thermodurcissable, et
- le mélange ainsi refroidi et solidifié est ensuite transformé en poudre.

Le malaxage à chaud des constituants de la composition a pour but d'obtenir une dispersion fine et régulière de la fritte d'émail dans la résine, dispersion dans laquelle les grains de poudre d'émail sont enrobés dans la résine.

Le malaxage du mélange doit se faire à une température à laquelle la résine thermodurcissable est suffisamment fluidifiée pour obtenir une bonne dispersion de la fritte d'émail dans cette résine, mais à laquelle il n'y a pas ou très peu de réticulation. Pour certaines compositions, ce malaxage se fera par exemple à une température de 130° à 140° si la réaction de réticulation n'a lieu, de manière significative qu'au-dessus de 180°C.

Le chauffage et le malaxage du mélange à une température supérieure à la température de fusion de la résine thermodurcissable peuvent avantageusement être effectués dans une extrudeuse chauffée.

Suivant une forme d'exécution particulière, le mélange chauffé et malaxé à une température supérieure à la température de fusion de la résine thermodurcissable est laminé entre des cylindres refroidis, la feuille refroidie ainsi obtenue étant ensuite transformée en poudre par concassage et broyage.

La présente invention a également pour objet un procédé de fabrication d'une tôle revêtue d'une composition contenant une fritte d'émail et une résine thermodurcissable. Suivant ce procédé, on applique sur au moins une des deux faces d'une tôle, une couche d'une composition d'émaillage pulvérulente telle que décrite ci-dessus, cette couche étant ensuite chauffée à une température et pendant un temps permettant de réticuler la résine thermodurcissable contenue dans la composition.

Sous l'effet de ce chauffage, la couche de composition pulvérulente se fluidifie et se transforme en un film continu, la poursuite du chauffage provoquant la réticulation de la résine contenue dans la composition.

Après avoir appliqué sur au moins une des deux faces de la tôle une couche de ladite composition pulvérulente et après avoir provoqué la réticulation de la résine thermodurcissable de cette couche, on peut éventuellement appliquer sur au moins une des deux faces de ladite tôle une nouvelle couche de composition pulvérulente conforme à l'invention, cette nouvelle couche étant ensuite chauffée à une température et pendant un temps permettant de réticuler la résine thermodurcissable de cette nouvelle couche.

On comprendra que ce procédé peut être exécuté suivant de nombreuses variantes. Suivant une de ces variantes, on applique d'abord sur les deux faces d'une tôle nue une couche d'une composition d'émaillage pulvérulente conforme à l'invention, contenant de la fritte d'émail "de masse", cette couche étant ensuite chauffée pour provoquer la réticulation. On applique ensuite sur une des deux faces de la tôle une nouvelle couche de composition pulvérulente suivant l'invention, contenant de la fritte d'émail "de couverte", cette couche étant ensuite chauffée pour provoquer sa réticulation.

La ou les couches de composition pulvérulente sont de préférence déposées sur la tôle par application électrostatique.

Pour appliquer cette composition pulvérulente en continu sur des bandes de tôle, on peut éventuellement utiliser des techniques d'application conventionnelles de poudre, comme le pistolage électrostatique.

Mais, selon une variante préférée de l'invention, on emploiera un procédé typiquement développé pour l'application de poudre en continu, comme un des procédés décrits dans les documents US 4,795,339, US 5,279,863 ou BE 9800367.

Avant l'application sur une tôle d'une première couche de la composition pulvérulente suivant l'invention, cette tôle doit être dégraissée.

Avant l'application de la couche de composition pulvérulente, la tôle dégraissée peut éventuellement encore être soumise à un ou plusieurs traitements de surface, tels que décapage, passivation, nickelage, etc.

En règle générale, il est avantageux mais aussi suffisant de soumettre la tôle dégraissée à un traitement de phosphatation, par exemple une phosphatation amorphe au fer.

Le chauffage d'une couche de ladite composition pulvérulente appliquée sur une tôle, pour réticuler la résine thermodurcissable de cette couche, peut être obtenu en faisant passer cette tôle dans une ou plusieurs étuves à air chaud.

Suivant un mode d'exécution avantageux, ce chauffage peut toutefois être obtenu en faisant passer ladite tôle dans un ou plusieurs fours à induction.

L'invention a également pour objet un procédé de production d'une pièce formée en tôle émaillée. Suivant ce procédé,
- on fabrique, suivant le procédé décrit ci-dessus (ou une des variantes de ce procédé), une tôle revêtue d'une composition (réticulée) contenant une fritte d'émail et une résine thermodurcissable,
- on met en forme la tôle revêtue de ladite composition réticulée, dans la forme de ladite pièce à produire,
- on cuit la pièce formée dans des conditions adaptées pour obtenir une pyrolyse complète du polymère réticulé, la température étant maintenue inférieure à la température de vitrification de la fritte contenue dans la composition, pendant cette cuisson de pyrolyse,
- on poursuit ensuite la cuisson de la pièce en augmentant la température jusqu'à une température appropriée pour obtenir la vitrification de l'émail, et
- on refroidit la pièce formée émaillée.

Après la mise en forme de la tôle revêtue de ladite composition réticulée et avant de cuire cette pièce pour pyrolyser le polymère réticulé, on peut éventuellement appliquer, sur au moins une face de ladite pièce formée, une couche de fritte d'émail pulvérulente.

Lorsqu'une pièce en tôle, mise en forme et couverte d'émail vitrifié a été produite selon un procédé conforme à l'invention, on peut appliquer sur au moins une des deux faces de cette pièce une nouvelle couche d'émail.

Ceci peut se faire en appliquant (par exemple par pistolage électrostatique) sur au moins une des deux faces de cette pièce une couche de fritte d'émail pulvérulente, la pièce recouverte de cette fritte d'émail étant ensuite cuite en portant sa température jusqu'à une température appropriée pour obtenir la vitrification de cette couche de fritte d'émail, après quoi la pièce formée émaillée ainsi produite est refroidie.

Dans le procédé de production d'une pièce formée en tôle émaillée, la mise en forme de la tôle revêtue de ladite composition réticulée peut se faire par les procédés habituels de mise en forme de tôles, en particulier donc par emboutissage et/ou placage et/ou cintrage.

Pour ce qui concerne la cuisson de la pièce formée, il importe que la phase de vitrification soit séparée de la phase de pyrolyse. Il faut, en effet, que la pyrolyse soit terminée à une température inférieure à la température de transition vitreuse de la fritte d'émail. A cette fin, on peut éventuellement prévoir dans le profil de montée en température, un palier (dont la durée sera, par exemple, comprise entre 15 et 60 secondes) à une température (par exemple comprise entre 400 et 500°C) à laquelle la pyrolyse peut être complétée sans que ne commence la vitrification de la fritte d'émail. Il y a lieu de maintenir une atmosphère oxydante dans le four de cuisson, ou la zone du four de cuisson qui correspond à ce palier, de manière à faciliter la combustion de la matière carbonée.

Comme on peut le comprendre de la description qui précède, le procédé suivant l'invention, pour la production de pièces formées émaillées, peut exister sous forme de nombreuses variantes.

L'ensemble du procédé de production d'une pièce formée en tôle émaillée peut éventuellement être exécuté en un même lieu (un même atelier ou une même usine, par exemple). Dans bien des cas cependant, les étapes successives du procédé seront exécutées en au moins deux endroits bien distincts. C'est ainsi, par exemple, que le début du procédé, c'est-à-dire la fabrication de la tôle (non mise en forme) revêtue de ladite composition d'émaillage réticulée peut avantageusement être exécutée dans ou à proximité d'une usine sidérurgique, en aval d'un laminoir.

Les tôles ainsi revêtues de la composition réticulée peuvent ensuite être livrées (sous forme de plaques empilées ou en bobines) à un utilisateur (par exemple un fabricant d'appareils électroménagers ou d'équipements sanitaires) qui parachèvera le procédé depuis la mise en forme de la tôle revêtue, jusqu'à l'obtention de la pièce en tôle, mise en forme et couverte de l'émail vitrifié.

Avec la technique conforme à l'invention, l'émail peut être appliqué sur la tôle en une ou plusieurs couches.

Dans la plupart des cas, l'émail sera appliqué en deux couches, à savoir une couche "de masse" et une couche "de couverte". Toutefois, l'émail peut éventuellement être appliqué en plus de deux couches, par exemple en trois couches, à savoir d'abord deux couches "de masse" et finalement une couche "de couverte".

La première couche (correspondant à de l'émail de masse) sera toujours appliquée, sous la forme de composition pulvérulente suivant l'invention, sur la tôle plane, donc avant la mise en forme.

Une deuxième couche de composition pulvérulente suivant l'invention qui peut correspondre soit à de l'émail de masse, soit à de l'émail de couverte) peut éventuellement être appliquée après la cuisson de réticulation de la première couche et avant la mise en forme. Cette deuxième couche portée par la tôle plane devra alors, à son tour, être chauffée à une température et pendant un temps permettant de réticuler la résine thermodurcissable qu'elle contient.

Après la mise en forme de la tôle, une nouvelle couche d'émail (émail de couverte) peut éventuellement être appliquée, avant ou après la cuisson de pyrolyse du polymère et de vitrification de l'émail de la couche (ou des couches) appliquée(s) avant la mise en forme. Il importe de noter que toute éventuelle nouvelle couche appliquée après la mise en forme consiste uniquement en une couche de fritte d'émail. En effet, à ce stade des opérations, il n'y a plus de raison d'utiliser une composition pulvérulente suivant l'invention puisque la mise en forme a déjà eu lieu.

Par rapport au procédé d'émaillage traditionnel (émaillage de pièces préformées au moyen de fritte d'émail), le procédé suivant l'invention offre notamment l'avantage que les tôles ne doivent plus être prétraitées chez l'utilisateur (émailleur). L'application de la composition d'émaillage sur une tôle plane est, en outre, beaucoup plus facile et rapide que l'application de fritte d'émail sur une pièce déjà formée. Dans un procédé suivant l'invention, l'application de la composition d'émaillage peut être effectuée en continu, ce qui permet notamment d'obtenir une très bonne régularité d'épaisseur de la couche d'émail.

La technique suivant l'invention offre aussi d'importants avantages par rapport à une technique qui implique l'application sur une tôle d'une composition fluide comprenant une fritte d'émail en suspension dans une solution de liant polymère.

Un avantage évident de la technique suivant l'invention découle directement du fait que la composition d'émaillage ne contient pas de solvant. Dans la technique antérieurement connue dans laquelle on utilise une composition fluide contenant des solvants organique, des quantités importantes de solvants (environ de 50 ml à 100 ml de solvant par m² de surface revêtue) doivent être évaporées et incinérées.

En outre, en utilisant la composition pulvérulente, on peut appliquer une épaisseur plus importante de composition qu'en utilisant des compositions fluides. Avec une composition fluide, il est souvent nécessaire d'appliquer deux couches de composition - chacune suivie d'une cuisson de réticulation - pour obtenir, après cuisson de vitrification, une épaisseur suffisante d'émail vitrifié. Avec la composition pulvérulente suivant l'invention, ce résultat peut être atteint en n'appliquant qu'une seule couche de composition sur la tôle.

La préparation d'une composition pulvérulente suivant l'invention est aussi plus aisée que la préparation d'une composition d'émaillage fluide et ne nécessite pas l'incorporation dans la composition d'agents de dispersion, d'agents anti-sédimentation ou d'agents anti-mousse.

La teneur en fritte d'émail d'une composition pulvérulente suivant l'invention peut aussi être sensiblement plus élevée que celle d'une composition d'émaillage fluide.

D'autres particularités et avantages de l'invention ressortiront de quatre variantes d'exécution décrites ci-après à titre d'exemples non limitatifs.

### Exemples 1, 2, 3 et 4

### Produits utilisés dans ces quatre exemples

### - Tôle :

Dans chacun des quatre exemples, la tôle utilisée est une tôle d'acier laminé à froid du type DC04EK (norme européenne EN 10209). Il est à noter que le choix de ce type d'acier n'est nullement critique et que de nombreuses autres qualités d'acier peuvent également être utilisées (par exemple les aciers du type DC01EK ou DC06EK). Dans les exemples 1, 2 et 3, cette tôle a une épaisseur de 0,80 mm. Dans l'exemple 4, la tôle a une épaisseur de 0,45 mm.

### - Résine :

Dans les quatre exemples, les compositions d'émaillages contiennent comme résine thermodurcissable une résine en poudre formulée comme suit. Les proportions des constituants de cette résine sont donnés en % en poids par rapport au poids total de la résine formulée :

| | |
|---|---|
| 90,88% | résine polyester commerciale à terminaison carboxylique ; Crylcoat 441® de la société UCB; |
| 6,84% | agent de réticulation : TGIC (triglycidyl isocyanurate) : Araldite PT 810® de la société Ciba-Geigy; |
| 0,08% | catalyseur : choisi dans le groupe des halogénures de phosphonium; |
| 1,63% | agent d'étalement : résine acrylique liquide adsorbée sur silice : Resiflow PV5 de la Société Worlée; |
| 0,57% | agent de dégazage : benzoïne |

### - Fritte d'émail :

### Fritte d'émail de masse : type GR de la Société PEMCO.

Cette fritte d'émail est finement broyée, de manière telle qu'on observe un refus de 6 à 10% en volume après tamisage sur un tamis de 40 µm (norme EN 10209).

### Production des pièces formées émaillées

### 1. Préparation du substrat de tôle d'acier

La tôle d'acier est soumise à un dégraissage alcalin (au moyen d'une solution commerciale de Parcolène 305C® de la Société Chemetall), à un rinçage à l'eau déminéralisée et à une phosphatation amorphe en fer (au moyen d'une solution commerciale de Bonderite 901® de la Société Chemetall).

### 2. Préparation de la composition d'émaillage

La résine polyester est mélangée à sec avec les additifs (agent de réticulation, catalyseur, agent d'étalement, agent de dégazage et éventuellement agent lubrifiant) et avec la fritte d'émail (sous forme de fine poudre) dans les proportions indiquées ci-dessous (% en poids par rapport au poids total de la composition) :

| Exemple | total résines | fritte | agent lubrifiant |
|---|---|---|---|
| 1 | 50 | 50 | 0 |
| 2 | 20 | 80 | 0 |
| 3 | 19 | 80 | 1 |
| 4 | 20 | 80 | 0 |

L'agent lubrifiant qui entre dans la composition suivant l'exemple 3 est une cire de polyéthylène.

Ce mélange est ensuite transféré dans une extrudeuse chauffée dans laquelle il est tout d'abord chauffé jusqu'à la fusion de la résine et des divers additifs (à l'exception bien entendu de la fritte d'émail). Dans l'extrudeuse, la composition est malaxée et mélangée de manière à obtenir une parfaite homogénéité des composants, puis extrudé.

Au sortir de l'extrudeuse, le produit pâteux est laminé entre deux cylindres refroidis, ce qui permet d'obtenir une feuille mince. Cette feuille est transportée au moyen d'une bande transporteuse refroidie qui abaisse la température du mélange et le solidifie. Le matériau solide est ensuite concassé et transformé en copeaux (ou "chips"). Ces copeaux sont ensuite broyés finement dans un broyeur cribleur et le broyat est tamisé.

La poudre fine obtenue présente les caractéristiques suivantes :
- un dépôt de 300 g/m² permet d'obtenir, pour une composition contenant 80% en poids de fritte d'émail (exemples 2, 3 et 4) et après cuisson de réticulation, une épaisseur d'environ 250 µm,
- cette épaisseur de 250 µm est réduite à environ 100 µm après pyrolyse complète des matières organiques et vitrification de la fritte d'émail.

### 3. Application de la composition d'émaillage sur le substrat

Dans les exemples 1, 2 et 3, la composition d'émaillage est appliquée, en laboratoire, sur une des faces du substrat, à l'aide d'un pistolet électrostatique du type "Corona"® jusqu'à l'obtention d'un revêtement de 300 g/m².

Dans l'exemple 4, la composition d'émaillage est appliquée, sur ligne pilote, sur une des faces du substrat, par le procédé de poudrage en continu décrit dans le document BE 9800367. Ici également on obtient un revêtement de 300 g/m².

### 4. Réticulation du revêtement

Dans les exemples 1, 2 et 3, on procède à la cuisson de réticulation dans une étuve à air chaud portée à 330°C et ce durant 100 secondes. La température maximale atteinte par la tôle de cette cuisson de réticulation est de 250°C.

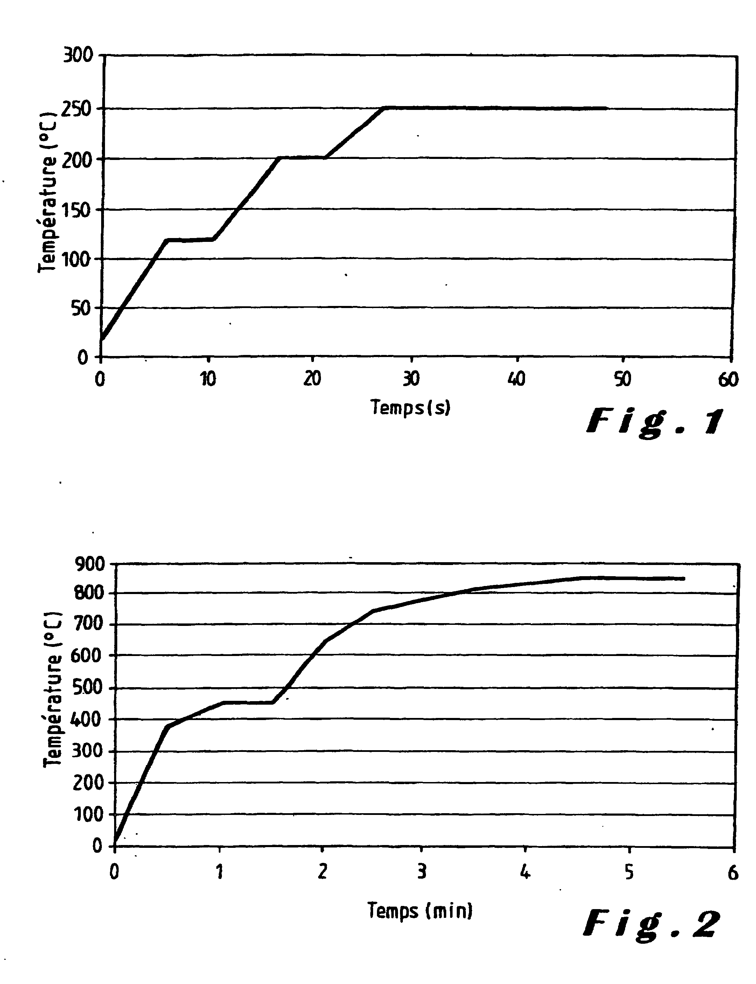

Dans l'exemple 4, on procède à la cuisson de réticulation par passage de la bande d'acier revêtue dans une série de fours à induction selon le profil thermique illustré à la Fig. 1 annexée. La température maximale atteinte par la tôle lors de cette cuisson de réticulation est de 250°C; le temps de maintien à cette température est d'environ 24 secondes.

### 5. Mise en forme

Dans chacun des quatre exemples, on emboutit ou on plie des échantillons plans de manière à pouvoir réaliser les tests d'évaluation décrits plus loin.

### 6. Cuisson de pyrolyse - Cuisson de vitrification

Dans chacun des quatre exemples, des échantillons plans et des échantillons mis en forme, revêtus de la composition réticulée, sont passés dans un four-tunnel sous atmosphère ambiante. Ce four-tunnel est doté de moyens d'évacuation des fumées. Le profil thermique de cette cuisson est montré sur le graphique de la Fig. 2 annexée.

La cuisson jusqu'à environ 450°C permet de pyrolyser les constituants organiques du revêtement (résine et autres constituants organiques). A cette température de 450°C, un palier d'une durée d'environ 30 secondes est ménagé dans le profil de montée en température, de manière à terminer la pyrolyse avant que la température ne soit à nouveau augmentée.

Pour la vitrification de la fritte d'émail, la température augmente jusque 850°C environ. Cette température maximale de 850°C est maintenue durant environ 1 minute.

### Tests d'évaluation

Des tests d'évaluation ont été effectués sur des échantillons, à différents stades de la préparation des pièces formées émaillées. Ces tests sont définis ci-après et les résultats des tests (pour les échantillons des quatre exemples) sont donnés ensuite dans un tableau.
1. Test effectués sur la composition d'application d'émaillage après préparation : courbe de répartition granulométrique de la poudre. La courbe de répartition granulométrique de la poudre est mesurée sur un appareil de type *Coulter*®. C'est la valeur prise au sommet de cette courbe qui est reprise dans le tableau des résultats.
2. Tests effectués sur la tôle revêtue de composition d'émail réticulée:
   2.1. Propriétés tribologiques de la surface revêtue :
      On mesure le coefficient de frottement sur la surface revêtue selon la méthode dite du "frottement progressif". Il consiste à mesurer la force nécessaire pour déplacer, à une vitesse constante de 0,2 m/min., un échantillon maintenu entre un chariot mobile et un outil et ce, pour des forces de serrage croissantes, de 300 à 600 kg. Le coefficient de frottement est le rapport entre la force de traction et la force de serrage. Il est généralement stable entre les valeurs de la force de serrage utilisées.
   2.2. Résistance à la fissuration et au décollement du revêtement :
      2.2.1. Après pliage (basé sur la norme internationale ISO 1519) : on effectue un pliage unique à 180°, de forme conique; le rayon de pliage minimal étant de 0 mm. On cote le résultat obtenu en "T" qui est le rapport du rayon de pliage sur l'épaisseur de la tôle. La valeur en "T" permet de définir la limite pour laquelle on observe de la fissuration du revêtement ou de la perte d'adhérence dans la zone du pliage.
      2.2.2. Après un emboutissage de 7 mm de profondeur à l'aide d'un appareil de test Erichsen (selon la norme internationale ISO 1520) : on examine à l'oeil nu le revêtement pour déceler d'éventuelles fissurations ou pertes d'adhérence.
      2.2.3. Après déformation rapide lors du test de tenue au choc (selon la norme ECCA T5 (European Coil Coating Association)) : on note la valeur maximale de l'énergie du choc (en inch.pound converti en kg.cm) pour laquelle on n'observe pas - a) de fissures - b) de perte d'adhérence.
   2.3. Résistance à la rayure selon la méthode de "Clemen" (selon la norme internationale ISO 1518) : on note (en g) la charge minimale qui permet à l'aiguille de pénétrer au travers du revêtement et d'atteindre le métal.
   2.4. Mesure de l'adhésion après le test de quadrillage (selon la norme internationale ISO 2409) : on trace une série de rayures perpendiculaires espacées de 2 mm. On applique ensuite sur la zone griffée un ruban adhésif puis on arrache ce ruban. On cote le décollement éventuel de revêtement entre des valeurs de 0 (les bords des incisions sont parfaitement lisses; aucun des carrés du quadrillage ne s'est détaché) et 4 (le revêtement s'est détaché le long des bords des incisions en larges bandes et/ou quelques carrés se sont détachés en partie ou en totalité. Une surface représentant nettement plus de 35% jusqu'à environ 65% est affectée).
   2.5. Résistance au solvant : permet de caractériser le degré de réticulation du revêtement. On frotte un morceau de coton hydrophile imbibé de méthyle éthyle cétone sur la surface revêtue en imprimant une série de 20 mouvements aller-retour (A-R). On observe les éventuelles dégradations du revêtement soumis à ce frottement.
3. Tests effectués sur la tôle émaillée après cuisson de vitrification :
   3.1. Aspects de surface : vérification visuelle de la présence ou de l'absence de défauts.
   3.2. Présence de "coups d'ongle" : le chauffage à haute température de l'acier revêtu d'émail en présence d'humidité provoque une oxydation du fer et la production d'hydrogène atomique (H). Cet hydrogène pénètre dans l'acier du fait de l'augmentation de sa solubilité. La couche d'émail vitrifiée se solidifie rapidement, emprisonnant cet hydrogène dans l'acier. Après retour à température normale, en raison de la baisse de solubilité, il y a saturation d'hydrogène (H) dans le métal. La diffusivité de l'hydrogène restant importante à température ambiante, celui-ci s'accumule sous forme moléculaire (H₂) dans toutes les "imperfections" de l'acier, en particulier à l'interface émail-acier. Lorsque la pression de gaz (H₂) est localement trop forte, il se produit une saute d'émail hémi-circulaire semblable à la marque de l'ongle dans de la pâte à modeler et qui, pour cette raison, s'appelle "coup d'ongle".
   3.3. Adhérence de l'émail sur le substrat après le test de tenue au choc (selon la norme européenne EN 10209) : déformation rapide de la tôle émaillée par la chute d'une masse de 1,5 kg depuis une hauteur qui est fonction de l'épaisseur de la tôle à tester (épaisseur minimale de 0,6 mm). L'adhérence de l'émail est ensuite évaluée par comparaison de l'aspect de l'impact réalisé sur la tôle émaillée testée et les photos de référence. On obtient une cotation de 5 niveaux, depuis "1" où la surface de l'impact est entièrement recouverte d'émail (excellente adhérence jusque "5" où la surface de l'impact est complètement nue (acier), la facture émail/acier est franche (mauvaise adhérence). Ce test n'a pas été effectué sur les échantillons de l'exemple 4 pour lesquels la tôle a une épaisseur de 0,45 mm.

| | Exemple 1 | Exemple 2 | Exemple 3 | Exemple 4 |
|---|---|---|---|---|
| 1 - Tests sur la composition: | | | | |
| maximum de la courbe de répartition granulométique | 80 µm | 75 µm | 75 µm | 75 µm |

| 2- Tests sur la tôle revêtue non vitrifiée | | | | |
|---|---|---|---|---|
| coefficient de frottement: | 0,18 | 0,20 | 0,14 | 0,20 |
| pliage conique: limite de fissuration | 4T | 6T | 6T | 10T |
| Erichsen 7 mm: | légère fissuration | légère fissuration | légère fissuration | légère fissuration |
| tenue au choc en kg.cm (en Ib.n) | | | | |
| sans fissuration: | 69(60) | 69(60) | 69(60) | 46(40) |
| sans perte d'adhérence: | 138(120) | 138(120) | 138(120) | 92(80) |
| résistance à la rayure Clemen: | >5000 g | >5000 g | >5000 g | 4500 g |
| adhérence après quadrillage: | classe 0 | classe 0 | classe 0 | classe 1 |
| résistance aux solvants: | pas de dégradation | pas de dégradation | pas de dégradation | pas de dégradation |

| 3-tests sur tôle émaillée: | | | | |
|---|---|---|---|---|
| aspect de surface: | sans défauts | sans défauts | sans défauts | sans défauts |
| coups d'ongle: | aucun | aucun | aucun | aucun |
| tenue au choc: | classe 1 | classe 1 | classe 1 | N.A. |

## Revendications

1. Composition d'émaillage comprenant une fritte d'émail et une résine thermodurcissable, cette composition étant **caractérisée en ce qu'**elle consiste en une poudre en substance exempte de solvant pour cette résine.

2. Composition suivant la revendication 1, **caractérisée en ce que** la résine thermodurcissable comprend :
- un ou plusieurs polymère(s) réticulable(s),
- un ou plusieurs agent(s) de réticulation apte(s) à provoquer la réticulation du ou des polymère(s) réticulable(s),
- au moins un catalyseur apte à catalyser la réaction de réticulation entre le ou les polymère(s) réticulable(s) et le ou les agent(s) de réticulation.

3. Composition suivant la revendication 2, **caractérisée en ce que** le ou les polymère(s) réticulable(s) est(sont) choisi(s) parmi les polymères réticulables du type époxy, polyester et acrylique.

4. Composition suivant l'une quelconque des revendications précédentes, **caractérisée en ce que** la résine thermodurcissable comprend au moins un agent d'étalement.

5. Composition suivant l'une quelconque des revendications précédentes, **caractérisée en ce que** la résine thermodurcissable comprend au moins un agent de dégazage.

6. Composition suivant l'une quelconque des revendications précédentes, **caractérisée en ce qu'**elle comprend au moins un agent lubrifiant.

7. Composition suivant l'une quelconque des revendications précédentes, **caractérisée en ce qu'**elle contient au moins 50% en poids de fritte d'émail, par rapport au poids total de la composition.

8. Composition suivant la revendication 7, **caractérisée en ce qu'**elle contient au moins 70% en poids de fritte d'émail, par rapport au poids total de la composition.

9. Composition suivant l'une quelconque des revendications précédentes, **caractérisée en ce que** la fritte d'émail a une répartition granulométrique telle qu'on observe un refus de moins de 10% en volume après tamisage avec un tamis de 40 µm.

10. Composition suivant l'une quelconque des revendications précédentes, **caractérisée en ce que** le maximum de sa courbe de répartition granulométrique mesurée sur un appareil du type Coulter® est égal ou inférieur à 100 µm.

11. Composition suivant la revendication 10, **caractérisée en ce que** le maximum de sa courbe de répartition granulométrique mesurée sur un appareil du type Coulter® est égal ou inférieur à 80 µm.

12. Procédé de fabrication d'une composition d'émaillage suivant l'une quelconque des revendications précédentes, **caractérisée en ce que**
- de la fritte d'émail sous forme pulvérulente et de la résine thermodurcissable sous forme pulvérulente ou granulaire sont mélangées à sec,
- ce mélange est chauffé et malaxé à une température supérieure à la température de fusion de la résine thermodurcissable mais inférieure à la température de réticulation,
- le mélange ainsi malaxé à chaud est ensuite refroidi en dessous de la température de transition vitreuse de la résine thermodurcissable,
- le mélange ainsi refroidi et solidifié est ensuite transformé en poudre.

13. Procédé suivant la revendication 12, **caractérisé en ce que** le chauffage et le malaxage du mélange à une température supérieure à la température de fusion de la résine thermodurcissable, sont effectués dans une extrudeuse chauffée.

14. Procédé suivant l'une quelconque des revendications 12 et 13, **caractérisé en ce que** le mélange chauffé et malaxé à une température supérieure à la température de fusion de la résine thermodurcissable est laminé entre des cylindres refroidis, la feuille refroidie ainsi obtenue étant ensuite transformée en poudre par concassage et broyage.

15. Procédé de fabrication d'une tôle en substance plane, revêtue d'une composition contenant une fritte d'émail et une résine thermodurcissable, **caractérisé en ce qu'**on applique sur au moins une des deux faces de la tôle, une couche d'une composition pulvérulente suivant l'une quelconque des revendications 1 à 11, cette couche étant ensuite chauffée à une température et pendant un temps permettant de réticuler ladite résine thermodurcissable.

16. Procédé suivant la revendication 15, **caractérisé en ce que**, après avoir appliqué sur au moins une des deux faces de la tôle une couche de ladite composition pulvérulente et après avoir provoqué la réticulation de la résine thermodurcissable de cette couche, on applique sur au moins une des deux faces de ladite tôle une nouvelle couche de composition pulvérulente suivant l'une quelconque des revendications 1 à 11, cette nouvelle couche étant ensuite chauffée à une température et pendant un temps permettant de réticuler la résine thermodurcissable de cette nouvelle couche.

17. Procédé suivant l'une quelconque des revendications 15 et 16, **caractérisé en ce que** ladite composition pulvérulente est appliquée sur ladite tôle par application électrostatique.

18. Procédé suivant l'une quelconque des revendications 15 à 17, **caractérisé en ce que**, avant l'application sur la tôle d'une première couche de ladite composition pulvérulente, cette tôle est dégraissée.

19. Procédé suivant l'une quelconque des revendications 15 à 18, **caractérisé en ce que**, avant l'application sur la tôle d'une première couche de ladite composition pulvérulente, cette tôle est phosphatée.

20. Procédé suivant l'une quelconque des revendications 15 à 19, **caractérisé en ce que** le chauffage d'une couche de ladite composition pulvérulente appliquée sur la tôle, pour réticuler la résine thermodurcissable de cette couche, est obtenu en faisant passer ladite tôle dans une ou plusieurs étuves à air chaud.

21. Procédé suivant l'une quelconque des revendications 15 à 20, **caractérisé en ce que** le chauffage d'une couche de ladite composition pulvérulente appliquée sur la tôle, pour réticuler la résine thermodurcissable de cette couche, est obtenu en faisant passer ladite tôle dans un ou plusieurs fours à induction.

22. Procédé de production d'une pièce formée en tôle émaillée, **caractérisé en ce que**
- on fabrique suivant le procédé conforme à l'une quelconque des revendications 15 à 21, une tôle en substance plane, revêtue d'une composition contenant une fritte d'émail et une résine thermodurcissable,
- on met en forme la tôle revêtue de ladite composition réticulée, dans la forme de ladite pièce à produire,
- on cuit la pièce formée dans des conditions adaptées pour obtenir une pyrolyse complète du polymère réticulé, la température étant maintenue inférieure à la température de vitrification de la fritte d'émail contenue dans la composition, pendant cette cuisson de pyrolyse,
- on poursuit la cuisson de la pièce en augmentant la température jusqu'à une température appropriée pour obtenir la vitrification de l'émail,
- on refroidit la pièce formée émaillée.

23. Procédé suivant la revendication 22, **caractérisé en ce**, après la mise en forme de la tôle revêtue de ladite composition réticulée et avant de cuire la pièce formée pour pyrolyser le polymère réticulé, on applique sur au moins une face de ladite pièce formée, une couche de fritte d'émail pulvérulente.

24. Procédé suivant l'une quelconque des revendications 22 et 23, **caractérisé en ce que**, après avoir refroidit la pièce formée émaillée,
- on applique sur au moins une des deux faces de cette pièce formée une couche de fritte d'émail pulvérulente,
- on cuit la pièce recouverte de cette couche de fritte pulvérulente en portant sa température jusqu'à une température appropriée pour obtenir la vitrification de cette couche de fritte d'émail, et
- on refroidit la pièce formée émaillée ainsi produite.

## Patentansprüche

1. Emaillierzusammensetzung, umfassend eine Emaillefritte und ein wärmehärtbares Harz, wobei diese Zusammensetzung **dadurch gekennzeichnet ist, daß** sie aus einem Pulver besteht, das im wesentlichen frei von Lösungsmittel für dieses Harz ist.

2. Zusammensetzung nach Anspruch 1, **dadurch gekennzeichnet, daß** das wärmehärtbare Harz umfaßt:
- ein vernetzbares Polymer oder mehrere vernetzbare Polymere,
- ein Vernetzungsmittel oder mehrere Vernetzungsmittel, das bzw. die dazu geeignet sind, die Vernetzung des vernetzbaren Polymers oder der vernetzbaren Polymere zu bewirken,
- mindestens einen Katalysator, der dazu geeignet ist, die Vernetzungsreaktion zwischen dem vernetzbaren Polymer oder den vernetzbaren Polymeren und dem Vernetzungsmittel oder den Vernetzungsmitteln zu katalysieren.

3. Zusammensetzung nach Anspruch 2, **dadurch gekennzeichnet, daß** das vernetzbare Polymer oder die vernetzbaren Polymere aus den vernetzbaren Polymeren vom Epoxid-, Polyester- und Acryltyp ausgewählt sind.

4. Zusammensetzung nach einem der voranstehenden Ansprüche, **dadurch gekennzeichnet, daß** das wärmehärtbare Harz mindestens ein Verlaufmittel umfaßt.

5. Zusammensetzung nach einem der voranstehenden Ansprüche, **dadurch gekennzeichnet, daß** das wärmehärtbare Harz mindestens ein Entgasungsmittel umfaßt.

6. Zusammensetzung nach einem der voranstehenden Ansprüche, **dadurch gekennzeichnet, daß** sie mindestens ein Schmiermittel umfaßt.

7. Zusammensetzung nach einem der voranstehenden Ansprüche, **dadurch gekennzeichnet, daß** sie mindestens 50 Gewichtsprozent Emaillefritte, bezogen auf das Gesamtgewicht der Zusammensetzung, enthält.

8. Zusammensetzung nach Anspruch 7, **dadurch gekennzeichnet, daß** sie mindestens 70 Gewichtsprozent Emaillefritte, bezogen auf das Gesamtgewicht der Zusammensetzung, enthält.

9. Zusammensetzung nach einem der voranstehenden Ansprüche, **dadurch gekennzeichnet, daß** die Emaillefritte eine solche granulometrische Verteilung aufweist, daß ein Rückstand von weniger als zehn Volumenprozent nach Sieben mit einem Sieb von 40 µm beobachtet wird.

10. Zusammensetzung nach einem der voranstehenden Ansprüche, **dadurch gekennzeichnet, daß** das Maximum ihrer mit einem Gerät vom Typ Coulter® gemessenen granulometrischen Verteilungskurve gleich ist wie oder kleiner ist als 100 µm.

11. Zusammensetzung nach Anspruch 10, **dadurch gekennzeichnet, daß** das Maximum ihrer mit einem Gerät vom Typ Coulter® gemessenen granulometrischen Verteilungskurve gleich ist wie oder kleiner ist als 80 µm.

12. Verfahren zur Herstellung einer Emaillierzusammensetzung nach einem der voranstehenden Ansprüche, **dadurch gekennzeichnet, daß**
- Emaillefritte in pulveriger Form und wärmehärtbares Harz in pulveriger oder körniger Form trocken gemischt werden,
- dieses Gemisch erwärmt und geknetet wird bei einer Temperatur oberhalb der Schmelztemperatur des wärmehärtbaren Harzes, aber unterhalb der Vernetzungstemperatur,
- das so warm geknetete Gemisch danach unterhalb der Glasübergangstemperatur des wärmehartbaren Harzes abgekühlt wird,
- das so abgekühlte und verfestigte Gemisch danach in ein Pulver umgewandelt wird.

13. Verfahren nach Anspruch 12, **dadurch gekennzeichnet, daß** das Erwärmen und das Kneten des Gemisches bei einer Temperatur oberhalb der Schmelztemperatur des wärmehärtbaren Harzes in einem beheizten Extruder durchgeführt werden.

14. Verfahren nach einem der Ansprüche 12 oder 13, **dadurch gekennzeichnet, daß** das erwärmte und bei einer Temperatur oberhalb der Schmelztemperatur des wärmehärtbaren Harzes geknetete Gemisch zwischen gekühlten Zylindern gewalzt wird, wobei das so erhaltene abgekühlte Blatt danach durch Zerstoßen und Zermahlen in ein Pulver umgewandelt wird.

15. Verfahren zur Herstellung eines im wesentlichen ebenen Blechs, das mit einer Zusammensetzung, welche eine Emaillefritte und ein wärmehärtbares Harz enthält, versehen ist, **dadurch gekennzeichnet, daß** auf mindestens eine der beiden Flächen des Blechs eine Schicht aus einer pulverförmigen Zusammensetzung gemäß einem der Ansprüche 1 bis 11 aufgebracht wird, wobei diese Schicht danach auf eine Temperatur und während einer Zeitdauer erwärmt wird, die es erlauben, das wärmehärtbare Harz zu vernetzen.

16. Verfahren nach Anspruch 15, **dadurch gekennzeichnet, daß**, nachdem auf mindestens eine der beiden Flächen des Blechs eine Schicht der pulverförmigen Zusammensetzung aufgebracht worden ist und nachdem die Vernetzung des wärmehärtbaren Harzes dieser Schicht bewirkt worden ist, auf mindestens eine der beiden Flächen des Bleches eine neue Schicht von pulverförmiger Zusammensetzung gemäß einem der Ansprüche 1 bis 11 aufgebracht wird, wobei diese neue Schicht danach auf eine Temperatur und während einer Zeitdauer erwärmt wird, die es erlauben, das wärmehärtbare Harz dieser neuen Schicht zu vernetzen.

17. Verfahren nach einem der Ansprüche 15 oder 16, **dadurch gekennzeichnet, daß** die pulverförmige Zusammensetzung auf das Blech durch elektrostatisches Aufbringen aufgebracht wird.

18. Verfahren nach einem der Ansprüche 15 bis 17, **dadurch gekennzeichnet, daß**, vor dem Aufbringen einer ersten Schicht der pulverförmigen Zusammensetzung auf das Blech, dieses Blech entfettet wird.

19. Verfahren nach einem der Ansprüche 15 bis 18, **dadurch gekennzeichnet, daß**, vor dem Aufbringen einer ersten Schicht der pulverförmigen Zusammensetzung auf das Blech, dieses Blech phosphatiert wird.

20. Verfahren nach einem der Ansprüche 15 bis 19, **dadurch gekennzeichnet, daß** die Erwärmung einer auf das Blech aufgebrachten Schicht der pulverförmigen Zusammensetzung, um das wärmehärtbare Harz dieser Schicht zu vernetzen, dadurch erhalten wird, daß man das Blech in einer oder mehreren Warmluft-Trockeneinrichtungen durchlaufen läßt.

21. Verfahren nach einem der Ansprüche 15 bis 20, **dadurch gekennzeichnet, daß** die Erwärmung einer auf das Blech aufgebrachten Schicht der pulverförmigen Zusammensetzung, um das wärmehärtbare Harz dieser Schicht zu vernetzen, dadurch erhalten wird, daß man das Blech in einem oder mehreren Induktionsöfen durchlaufen läßt.

22. Verfahren zur Herstellung eines geformten Teils aus emailliertem Blech, **dadurch gekennzeichnet, daß**
- gemäß dem Verfahren nach einem der Ansprüche 15 bis 21 ein im wesentlichen ebenes Blech, das mit einer Zusammensetzung versehen ist, welche eine Emaillefritte und ein wärmehärtbares Harz enthält, hergestellt wird,
- das mit der vernetzten Zusammensetzung versehene Blech in die Form des herzustellenden Teils umgeformt wird,
- das geformte Teil unter Bedingungen gebrannt wird, die dazu geeignet sind, eine vollständige Pyrolyse des vernetzten Polymers zu erhalten, wobei die Temperatur während dieses Pyrolysebrandes unterhalb der Glasbildungstemperatur der in der Zusammensetzung enthaltenen Emaillefritte gehalten wird,
- der Brand des Teils unter Erhöhung der Temperatur bis zu einer zum Erhalten der Glasbildung des Emailles geeigneten Temperatur fortgesetzt wird,
- das emaillierte geformte Teil abgekühlt wird.

23. Verfahren nach Anspruch 22, **dadurch gekennzeichnet, daß**, nach der Umformung des mit der vernetzten Zusammensetzung versehenen Blechs und vor dem Brennen des geformten Teils zum Pyrolysieren des vernetzten Polymers, auf mindestens eine Fläche des geformten Teils eine Schicht von pulverförmiger Emaillefritte aufgebracht wird.

24. Verfahren nach einem der Ansprüche 22 oder 23, **dadurch gekennzeichnet, daß**, nachdem das emaillierte geformte Teil abgekühlt worden ist,
- auf mindestens eine der beiden Flächen dieses geformten Teils eine Schicht von pulverförmiger Emaillefritte aufgebracht wird,
- das mit dieser Schicht von pulverförmiger Fritte bedeckte Teil gebrannt wird, indem seine Temperatur bis auf eine Temperatur gebracht wird, die dazu geeignet ist, die Glasbildung dieser Schicht von Emaillefritte zu erhalten, und
- das so hergestellte emaillierte geformte Teil abgekühlt wird.

## Claims

1. Enamelling composition comprising an enamel frit and a thermosetting resin, this composition being **characterised in that** it consists of a powder in the form of a substance which contains no solvent for this resin.

2. Composition according to Claim 1, **characterised in that** the thermosetting resin comprises:
- one or more cross-linkable polymers,
- one or more cross-linking agents able to cause the cross-linking of the cross-linkable polymer or polymers,
- at least one catalyst able to catalyse the cross-linking reaction between the cross-linkable polymer or polymers and the cross-linking agent or agents.

3. Composition according to Claim 2, **characterised in that** the cross-linkable polymer or polymers are chosen from amongst the cross-linkable polymers of the epoxy, polyester and acrylic type.

4. Composition according to any one of the preceding claims, **characterised in that** the thermosetting resin comprises at least one spreading agent.

5. Composition according to any one of the preceding claims, **characterised in that** the thermosetting resin comprises at least one degassing agent.

6. Composition according to any one of the preceding claims, **characterised in that** it comprises at least one lubricating agent.

7. Composition according to any one of the preceding claims, **characterised in that** it contains at least 50% by weight enamel frit, compared with the total weight of the composition.

8. Composition according to Claim 7, **characterised in that** it contains at least 70% by weight enamel frit, with respect to the total weight of the composition.

9. Composition according to any one of the preceding claims, **characterised in that** the enamel frit has a particle size distribution such that less than 10% by volume has failed to pass after sieving with a 40 µm sieve.

10. Composition according to any one of the preceding claims, **characterised in that** the maximum of its particle size distribution curve measured on an apparatus of the Coulter® type is equal to or less than 100 µm.

11. Composition according to Claim 10, **characterised in that** the maximum of its particle size distribution curve measured on an apparatus of the Coulter® type is equal to or less than 80 µm.

12. Method of manufacturing an enamelling composition according to any one of the preceding claims, **characterised in that**
- enamel frit in powder form and thermosetting resin in powder or granular form are mixed dry,
- this mixture is heated and mixed at a temperature higher than the fusion temperature of the thermosetting resin but lower than the cross-linking temperature,
- the mixture thus mixed hot is then cooled below the glass transition temperature of the thermosetting resin,
- the mixture thus cooled and solidified is then converted into powder.

13. Method according to Claim 12, **characterised in that** the heating and mixing of the mixture at a temperature higher than the fusion temperature of the thermosetting resin are carried out in a heated extruder.

14. Method according to either one of Claims 12 and 13, **characterised in that** the mixture heated and mixed at a temperature higher than the fusion temperature of the thermosetting resin is rolled between cooled cylinders, the cooled sheet thus obtained then being converted into powder by crushing and grinding.

15. Method of manufacturing a sheet of flat substance, coated with a composition containing an enamel frit and a thermosetting resin, **characterised in that** a layer of a powdery composition according to any one of Claims 1 to 11 is applied to at least one of the two faces of the sheet, this layer then being heated at a temperature and for a length of time making it possible to cross-link the said thermosetting resin.

16. Method according to Claim 15, **characterised in that**, after having applied a layer of the said powdery composition to at least one of the two faces of the sheet and after having caused the cross-linking of the thermosetting resin in this layer, a further layer of powdery composition according to any one of Claims 1 to 11 is applied to at least one of the two faces of the said sheet, this further layer then being heated at a temperature and for a length of time making it possible to cross-link the thermosetting resin of this further layer.

17. Method according to either one of Claims 15 and 16, **characterised in that** the said powdery composition is applied to the said sheet by electrostatic application.

18. Method according to any one of Claims 15 to 17, **characterised in that**, before the application of a first layer of the said powdery composition to the sheet, this sheet is degreased.

19. Method according to any one of Claims 15 to 18, **characterised in that**, before the application of a first layer of the said powdery composition to the sheet, this sheet is phosphatised.

20. Method according to any one of Claims 15 to 19, **characterised in that** the heating of a layer of the said powdery composition applied to the sheet, in order to cross-link the thermosetting resin in this layer, is obtained by causing the said sheet to pass through one or more hot-air ovens.

21. Method according to any one of Claims 15 to 20, **characterised in that** the heating of a layer of the said powdery composition applied to the sheet, in order to cross-link the thermosetting resin in this layer, is obtained by causing the said sheet to pass through one or more induction ovens.

22. Method of producing a piece formed from enamelled sheet, **characterised in that**
- according to the method in accordance with any one of Claims 15 to 17, a sheet made from flat substance is fabricated, coated with a composition containing an enamel frit and a thermosetting resin,
- the sheet coated with the said cross-linked composition is formed in the form of the said piece to be produced,
- the piece formed is cured under conditions adapted to obtain complete pyrolysis of the cross-linked polymer, the temperature being maintained below the vitrification temperature of the enamel frit contained in the composition, during this pyrolysis curing,
- the curing of the piece is continued by increasing the temperature up to an appropriate temperature in order to obtain vitrification of the enamel,
- the enamelled formed piece is cooled.

23. Method according to Claim 22, **characterised in that**, after the forming of the sheet coated with the said cross-linked composition and before curing the formed piece in order to pyrolyse the cross-linked polymer, a layer of powdery enamel frit is applied to at least one face of the said formed piece.

24. Method according to either one of Claims 22 and 23, **characterised in that**, after having cooled the enamelled formed piece,
- a layer of powdery enamel frit is applied to at least one of the two faces of this formed piece,
- the piece covered with this layer of powdery frit is cured by raising its temperature to an appropriate temperature for obtaining vitrification of this layer of enamel frit, and
- the enamelled formed piece thus produced is cooled.
